# EUROPÄISCHE PATENTANMELDUNG

(11) **EP 4 600 092 A1**
(43) Veröffentlichungstag der Anmeldung: **13.08.2025**
(21) Anmeldenummer: 24156816.1
(22) Anmeldetag: 09.02.2024
(51) Int. Cl.: B60R 16/02

(54) **KABELSATZ SOWIE VERFAHREN ZUR HERSTELLUNG EINES KABELSATZES**

(71) Anmelder: LEONI Bordnetz-Systeme GmbH, 97318 Kitzingen (DE)
(72) Erfinder: ENDRES, Michael, 97070 Würzburg (DE); SEIDEL, Toralf, 97232 Giebelstadt (DE)
(74) Vertreter: FDST Patentanwälte

(57) **Zusammenfassung**

Der erfindungsgemäße Kabelsatz (2) ist insbesondere für ein Fahrzeug vorgesehen und weist eine Mehrzahl von Leitungen (4) auf, die auf einem flexiblen Träger (8) angebracht sind, wobei zumindest an einer der Leitungen (4) einer elektrischen Komponente (6), insbesondere ein Kontaktstecker angebracht ist, die am Träger (8) durch Material des Trägers (8) zumindest temporär fixiert ist, derart, dass die zumindest eine Komponente (6) bei einer späteren Montage des Kabelsatzes (2) bewegbar ist und zwar insbesondere in eine Steckrichtung (28) zum Einstecken in ein elektrisches Bauteil (26). Hierdurch ist die zumindest eine Komponente (6) lagefixiert und für eine spätere, insbesondere automatisierte Endmontage des Kabelsatzes (2) beispielsweise an einem Trägermodul zugänglich und kann beispielsweise in einen korrespondierenden Gegenstecker automatisiert eingesteckt werden.

## Beschreibung

Die Erfindung betrifft einen Kabelsatz insbesondere für ein Fahrzeug sowie ein Verfahren zur Herstellung eines solchen Kabelsatzes.

Ein Kabelsatz weist regelmäßig eine Mehrzahl von Leitungen auf, die gemäß einer vorgegebenen Verlegestruktur verlegt sind. Üblicherweise sind an den Leitungen Komponenten, insbesondere Kontaktstecker vorkonfektioniert angebracht.

Ein derartiger Kabelsatz wird insbesondere im Kraftfahrzeugbereich eingesetzt um elektrische Bauteile an das Bordnetz des Kraftfahrzeugs anzuschließen.

Häufig ist das Bordnetz in unterschiedliche Zonen oder Module untergliedert, wobei eine jeweilige Zone über einen modulspezifischen Kabelsatz angeschlossen ist. Beispielsweise handelt es sich bei dem Kabelsatz um einen Kabelsatz für ein Türmodul, für ein Heckklappen-Modul, für ein Dachmodul (Fahrzeughimmel), für ein Armaturenmodul usw. Bei diesen Ausführungsvarianten wird der Kabelsatz typischerweise auf das Karosserieblech und / oder auf einem Trägermodul angebracht, auf dem elektrische Komponenten, wie beispielsweise Elektromotoren, Lautsprecher, Steuergeräte usw. mechanisch fixiert sind. Diese elektrische Komponenten sind über den Kabelsatz angeschlossen.

Die Montage des Kabelsatzes an einem solchen Trägermodul ist dabei häufig aufwendig und nur schwer automatisierbar. Ein Grund hierfür ist unter anderem auch darin zu sehen, dass der Kabelsatz typischerweise sehr biegeschlaff ist und darüber hinaus häufig eine komplexe Verlegestruktur aufweist.

Ausgehend hiervon liegt der Erfindung die Aufgabe zugrunde, einen Kabelsatz bereitzustellen, welcher einfach und insbesondere automatisiert montiert werden kann, und insbesondere an einem derartigen Trägermodul oder an der Karosserie angebracht werden kann.

Die Aufgabe wird gemäß der Erfindung gelöst durch einen Kabelsatz insbesondere für ein Fahrzeug, mit einer Mehrzahl von Leitungen, die gemäß einer vorgegebenen Verlegestruktur auf einem flexiblen Träger angebracht sind und mit zumindest einer an der Leitungen angebrachten Komponente, insbesondere einem Kontaktstecker, die am Träger durch Material des Trägers zumindest temporär fixiert ist. Die Fixierung ist dabei derart, dass die zumindest eine Komponente bei einer späteren Montage des Kabelsatzes bewegbar ist, und zwar insbesondere in eine Steckrichtung zum Einstecken in ein elektrisches Bauteil.

Hierzu ist insbesondere ein Teilbereich der zumindest einen Komponente für eine spätere, insbesondere automatisierte Montage zugänglich und kann insbesondere gegriffen werden.

Durch die Fixierung der zumindest einen Komponente, wird diese auf dem Träger an einer definierten Position fixiert.

Bei der späteren Montage wird allgemein bevorzugt derart vorgegangen, dass der Träger zunächst an einem Trägermodul bzw. an einem Karosseriebauteil positioniert und z.B. fixiert wird und dass anschließend die zumindest eine Komponente in eine Endmontageposition bewegt wird. Speziell wird bei der Ausbildung der Komponente als Kontaktstecker dieser in Richtung zu einem Gegenstecker bewegt und in diesen eingesteckt. Bevorzugt ist daher die Komponente in eine Steckrichtung bewegbar. Die Bewegung der Komponente erfolgt daher insbesondere in einer Steckrichtung, d.h. die Bewegbarkeit ist in Steckrichtung orientiert.

Die Beweglichkeit bzw. die Bewegung ist bzw. erfolgt bevorzugt relativ zum Träger. Bei dieser Variante ist daher die Komponente nur temporär fixiert und wird aus der durch die Haltelasche gebildeten Fixierung herausgenommen. Alternativ erfolgt die Bewegung zusammen mit zumindest einem Teilstück des Trägers, d.h. die Komponente wird z.B. zusammen mit der Haltelasche gegriffen und in Steckrichtung bewegt. Bevorzugt wird dabei jedoch nur ein Teilstück des Trägers mitbewegt, während andere Bereich des Trägers ortsfest verbleiben. Der Träger weist allgemein bevorzugt eine Flexibilität und / oder Elastizität auf. Diese erlaubt es, dass nur ein Teilbereich des Trägers im Bereich der Komponente bei deren Montage mitbewegt wird.

Bevorzugt ist der bereits zuvor beschriebene Teilbereich der Komponente frei zugänglich, also nicht vom Trägermaterial überdeckt. In diesem frei zugänglichen Bereich kann die Komponente betätigt und insbesondere gegriffen werden und insbesondere aus der Fixierung herausgenommen werden und an die gewünschte Endmontageposition verbracht werden.

Alternativ ist die Komponente jedoch beispielsweise vom Trägermaterial temporär überdeckt und beispielsweise eingebettet. Allerdings derart, dass weiterhin die Komponente bei der späteren Montage in die gewünschte Endposition bewegbar ist. Hierzu ist die Komponente nur vorübergehend vom Trägermaterial umgeben Speziell ist eine verschlossene Tasche ausgebildet, wobei eine Seite dieser Tasche für die Montage geöffnet werden kann. Diese Seite ist beispielsweise durch einen reversiblen Verschlussmechanismus, wie beispielsweise ein Klettverschluss, temporär verschlossen. Alternativ ist eine Sollbruchstelle definiert, beispielsweise durch lediglich eine punktuelle und damit leicht trennbare Verschweißung von zwei Lagen des Trägermaterials. Eine solche Sollbruchstelle ist insbesondere derart beschaffen, dass sie bei einer Bewegung der Komponente bei der Endmontage aufgebrochen wird. Alternativ wird sie mit einem entsprechenden Werkzeug wie z.B. ein Schneidelement aufgebrochen / aufgeschnitten.

Insbesondere hierzu wird die Komponente beispielsweise mittelbar an den an sie angeschlossenen Leitungen gegriffen und gezogen oder ggf. auch anderweitig relativ zum Träger gezogen / geschoben, so dass die Sollbruchstelle aufbricht und die Komponente speziell in Steckrichtung bewegt und insbesondere mit einem elektrischen Bauteil verbunden werden kann.

Insgesamt ist daher durch den Träger und durch die Haltelaschen eine ortsnahe Fixierung der Komponente im unmittelbaren Bereich der späteren Endmontageposition erreicht, so dass - wenn der Träger für die Endmontage auf das Trägermodul / das Karosseriebauteil aufgelegt ist - die Komponente sich in unmittelbarer Nähe ihrer Endmontageposition befindet. Gleichzeitig ist durch die Fixierung z.B. auch eine gute Transportsicherung der Komponente am Träger erreicht.

Der Kabelsatz weist üblicherweise eine verzweigte Struktur mit einer Mehrzahl von derartigen Komponenten auf, die über den Träger verteilt angeordnet sind. Insbesondere jede dieser Komponenten ist am Träger durch das Trägermaterial fixiert und damit in einer definierten Position gehalten.

Eine jeweilige durch das Trägermaterial ausgebildete Fixierung ist - wie zuvor bereits erläutert - derart ausgebildet, dass bevorzugt der bereits erwähnte Teilbereich der Komponente zugänglich ist, sodass dieser Teilbereich für ein Betätigungselement insbesondere einer automatisierten Montageeinrichtung zugänglich ist. Bei dem Betätigungselement handelt es sich insbesondere um ein Greifwerkzeug beispielsweise eines Roboters. Alternativ oder ergänzend wird die Komponente durch einen entsprechenden Stempel in eine gewünschte Montage-Endposition geschoben. In einer einfachsten Variante ist daher zumindest / lediglich eine Seite der Komponente zugänglich, so dass ein solcher Stempel die Komponente z.B. aus der Fixierung heraus schieben kann. In jedem Fall ist der Teilbereich der zumindest einen Komponente daher für die Betätigung eines solchen Werkzeuges frei zugänglich. Bevorzugt ist der Teilbereich - im Falle der Ausbildung der Komponente als ein Kontaktstecker - an einem rückwärtigen Abschnitt der Komponente gegenüberliegend zu einer vorderen Stirnseite angeordnet, wobei die freie Stirnseite als eine Kontaktseite zur Steckkontaktierung mit einem Gegenstecker ausgebildet ist.

Der frei zugängliche Teilbereich der Komponente beträgt beispielswiese zumindest ein Fünftel, vorzugsweise zumindest ein Viertel oder auch ein Drittel der Komponente.

Weiterhin ist hervorzuheben, dass die jeweilige Komponente unmittelbar durch Material des Trägers selbst am Träger fixiert ist. Es sind daher keine zusätzlichen Halteelemente am Träger angebracht, welche die Komponente beispielsweise umgreifen, um diese zu fixieren.

Zur Fixierung der zumindest einen Komponente am Träger bestehen unterschiedliche Möglichkeiten, die auch miteinander kombiniert werden können. Bevorzugt wird die zumindest eine Komponente durch eine der nachfolgend beschriebenen Varianten am Träger fixiert. Unterschiedliche Komponenten können dabei durch unterschiedliche Varianten fixiert werden.

Gemäß einer bevorzugten ersten Variante ist aus dem Träger zumindest eine Haltelasche teilweise freigeschnitten, sodass die Haltelasche mit einer Basisseite noch mit dem verbleibenden restlichen Träger verbunden ist. Die Haltelasche ist um die zumindest eine Komponente gelegt, wobei hierzu die Haltelasche entsprechend gefaltet oder gebogen ist. Ein Befestigungsabschnitt der Haltelasche ist anschließend wieder zumindest punktuell mit dem verbleibenden Träger verbunden, also mit diesem befestigt. Die Verbindung des Befestigungsabschnitts mit dem verbleibenden Träger erfolgt beispielsweise durch Verkleben, durch Schweißen, durch Nähen oder auch mithilfe von Klammern usw.

Bei dieser ersten Variante wird der Träger in einer Vorbehandlung entsprechend vorgeschnittenen, sodass entlang von Schnittlinien die Haltelaschen aus dem Träger herausgenommen werden können. Das Einbringen dieser Schnittlinien erfolgt beispielsweise durch ein mechanisches Schneiden beispielsweise mithilfe eines Messers oder alternativ auch durch Stanzen oder Laserschneiden.

Die Komponente wird mit Hilfe der beispielsweise streifenförmigen Haltelasche fixiert.

Gemäß einer bevorzugten Variante wird die Komponente teilweise durch eine Öffnung im Träger teilweise hindurchgesteckt. Die Öffnung ist beispielsweise durch das Freischneiden ausgebildet und bildet eine freigeschnittene Öffnung. Bevorzugt ist die Komponente anschließend mit Hilfe der Haltelasche fixiert. Diese Haltelasche überspannt beispielsweise insbesondere einen rückwärtigen Teilabschnitt der Komponente. Die Öffnung ist beispielsweise derart ausgebildet, dass die Komponente in dieser formschlüssig gehalten ist. Bevorzugt ist die Komponente senkrecht zu dem Träger orientiert. Bei der Ausbildung als ein Kontaktstecker ist beispielsweise dieser mit seinem Kontakt- oder Steckbereich voraus durch den Träger geführt.

Diese Öffnung weist beispielsweise eine T-Form oder auch eine H-Form auf und ist insbesondere also als ein Schlitz mit endseitig zumindest einem Querschlitz (T-Form) oder zwei Querschlitzen (H-Form) ausgebildet.

Gemäß einer bevorzugten Weiterbildung werden mit einem herausgetrennten Teilstück des Trägers mehrere Haltelaschen ausgebildet. Hierzu wird z.B. zunächst eine z.B. langestreckte Lasche freigeschnitten und anschließend an mehreren, voneinander beanstandeten Stellen zur Ausbildung von zumindest zwei getrennten Haltebereichen wieder mit dem verbleibenden Träger verbunden. Dabei werden jeweils Teilstücke der freigeschnittenen Lasche aufgebauscht, so dass ein Einsteckraum / Haltebereich ausgebildet ist, in / durch den die jeweilige Komponente oder auch die Leitungen (ein-) gesteckt oder durchgeführt werden können. Insbesondere werden zwei nebeneinander angeordnete Haltelaschen ausgebildet, wobei die eine Haltelasche die Komponente aufnimmt und durch die andere Haltelasche ein an der Komponente angebrachter Leitungsabschnitt der Leitungen geführt ist.

In zweckdienlicher Ausgestaltung ist durch die zumindest eine Haltelasche eine nur einseitig offene Tasche ausgebildet, in der die zumindest eine Komponente einliegt. Die Tasche weist allgemein einen Boden sowie Seitenwandbereiche auf, die die zumindest eine Komponente umgeben.

In bevorzugter Ausgestaltung ist gemäß einer zweiten Variante im Träger eine Öffnung mit zwei unterschiedlich großen Öffnungsbereichen, also mit einem großen Öffnungsbereich und mit einem kleinen Öffnungsbereich ausgebildet. Bevorzugt sind diese beiden Öffnungsbereiche über eine durch einen Öffnungsschlitz gebildete Verbindung miteinander verbunden. Die zumindest eine Komponente ist durch den großen Öffnungsbereich zumindest teilweise hindurchgeführt und anschließend durch seitliches Verlagern in den kleinen Öffnungsbereich verschoben und ist dort formschlüssig gehalten. Bei dieser Ausführungsvariante wird daher die zumindest eine Komponente in einer nach dem Schlüsselloch-Prinzip ausgebildeten Öffnung formschlüssig in dem kleinen Öffnungsbereich gehalten, indem ein Öffnungsrand und damit Material des Trägers einen Abschnitt, beispielsweise eine Einschnürung, der zumindest einen Komponente umgreift. Speziell weist diese einen verbreiterten Haltebereich oder Vorsprung auf, welcher also von dem Öffnungsrand hintergriffen ist.

In weiter bevorzugter Ausgestaltung ist gemäß einer dritten Variante der Träger zweilagig und insbesondere lediglich teilweise zweilagig ausgebildet, und zwar mit einer Trägerlage und mit einer daran insbesondere lediglich bereichsweise angebrachten Fixierlage. Die zumindest eine Komponente ist in einer zwischen der Trägerlage und der Fixierlage ausgebildeten Tasche angebracht. Die zumindest eine Komponente ist daher üblicherweise vollständig von der Fixierlage und der Trägerlage bis auf eine Öffnung an einer Seite umgeben. Aus dieser Tasche kann bei Bedarf die zumindest eine Komponente herausgezogen werden.

Auch bei dieser Variante ist die Komponente für eine spätere Montage zugänglich. Sie ist daher insbesondere lediglich temporär in der ausgebildeten Tasche fixiert und wird bei der späteren Montage aus dieser herausgenommen. Bevorzugt ist die Komponente parallel zu der Trägerlage orientiert.

Zur Ausbildung der Tasche ist die Fixierlage typischerweise aufgebauscht, also quasi zusammengerafft, so dass ein freier, die Tasche bildender Einsteckraum ausgebildet ist. Die Trägerlage ist in diesem Bereich üblicherweise glatt und eben ausgebildet. Diese Aufbauschung ist weiterhin fixiert, indem Abschnitte der Fixierlasche seitlich neben der Aufbauschung mit der Trägerlage fixiert sind.

Die Fixierlage überdeckt die Trägerlage dabei bevorzugt nicht vollständig und ist daher nur bereichsweise ausgebildet ist. Dies bedeutet, dass einige Abschnitte der Trägerlage nicht von der Fixierlage überdeckt sind. Insbesondere ist der zuvor erwähnte Teilbereich der zumindest einen Komponente nicht von der Fixierlage überdeckt und damit weiterhin frei zugänglich.

Beispielsweise sind über die Trägerlage verteilt mehrere verschiedene Fixierlagen angebracht.

Alternativ kann die Fixierlage auch die gesamte Trägerlage überdecken, wobei vorzugsweise einige Aussparungen in der Fixierlage ausgebildet sind, über die die Komponenten jeweils zugänglich sind.

Bevorzugt ist die Fixierlage im Vergleich zu der Trägerlage unterschiedlich ausgebildet. Bevorzugt bestehen beide Lagen aus dem gleichen Material, also beispielsweise dem gleichen Vlies. Dies ist jedoch nicht zwingend erforderlich. Insbesondere unterscheiden sich die beiden Lagen im Hinblick auf ihre Materialdicke und/oder ihr Flächengewicht. Bevorzugt ist hierbei die Fixierlage dünner bzw. mit einem geringeren Flächengewicht im Vergleich zur Trägerlage ausgebildet. Die Dicke bzw. das Flächengewicht unterscheiden sich beispielsweise zumindest um den Faktor zwei oder drei. Beispielsweise weist die Trägerlage insbesondere bei der Ausgestaltung als ein Vlies ein Flächengewicht im Bereich von 70 g/m² bis 240 g/m² auf. Die Fixierlage weist dann beispielsweise ein Flächengewicht von 35 g/m² bis 120 g/m² auf. Speziell ist eine Kombination von 140 g/m² für die Trägerlage und 40 g/m² für die Fixierlage vorgesehen. Alternativ zu dieser unterschiedlichen Ausgestaltung sind Trägerlage und Fixierlage im Hinblick auf ihre Materialeigenschaften, insbesondere im Hinblick auf ihre Dicke bzw. im Hinblick auf ihr Flächengewicht identisch ausgebildet. In diesem Fall liegen die Flächengewichte beispielsweise im Bereich von 60 g/m² bis 100 g/m².

Die beiden Lagen bestehen dabei insbesondere aus PET, PP oder einem Gemisch hiervon.

In zweckdienlicher Weiterbildung lässt die Fixierlage einen sich an die Komponente anschließenden Leitungsabschnitt der zumindest einen Leitung frei. Dies bedeutet, dass die zumindest eine Komponente mit ihrer vorderen Stirnseite voraus in die Tasche eintaucht. Der unmittelbar an die Komponente angrenzende Leitungsabschnitt ist daher nicht fixiert. Dies hat den Vorteil, dass bei der nachfolgenden Montage am Trägermodul die zumindest eine Komponente gegriffen und montiert werden kann. Durch den nicht fixierten Leitungsabschnitt können hier Montagetoleranzen problemlos ausgeglichen werden.

Bei der zumindest einen Komponente handelt es sich in bevorzugter Ausgestaltung um einen Kontaktstecker, welcher sich in einer Steckrichtung erstreckt und welcher in Steckrichtung an einer vorderen Stirnseite Steckkontakte wie beispielsweise Kontaktstifte oder Kontaktbuchsen zur elektrischen Steckverbindung mit einem Gegenstecker aufweist.

Bei dem Träger handelt es sich vorzugsweise um einen textilen Träger wie ein Vlies oder ein Gewebe. Das Material des Trägers ist daher durch das Vlies oder das Gewebe gebildet. Alternativ hierzu kann der Träger auch aus einer Folie bestehen. Der Vorteil eines textilen Trägers ist darin zu sehen, dass durch das textile Material zugleich auch eine Dämpfung und/oder eine Dämmung erreicht ist.

Zweckdienlicherweise ist die zumindest eine Komponente nur temporär fixiert und kann aus ihrer fixierten Position herausgezogen werden. Bei der Montage wird die jeweilige Komponente daher auch aus dieser fixierten Position herausgezogen. Im endmontierten Zustand, d.h. insbesondere im montierten Zustand im Kraftfahrzeug, äußert sich dies daher darin, dass die zuvor ausgebildeten Fixierbereiche, beispielsweise die Haltelaschen und Taschen frei und unbelegt sind. Diese dienen daher lediglich zur Fixierung der Komponenten an definierten Positionen am Träger, um so die Montage und insbesondere Ausbildung von Steckverbindungen zwischen den Kontaktsteckern und den anzuschließenden elektrischen Komponenten zu vereinfachen.

Alternativ hierzu verbleiben die Komponenten in ihrer jeweiligen fixierten Position. Durch die Flexibilität des Trägers besteht in diesem Fall ebenfalls die Möglichkeit, die jeweilige Komponente in die gewünschte Endmontageposition zu überführen und beispielsweise mit einem Gegenstecker zu verbinden.

Durch die Fixierung der Komponenten am Träger sind diese jeweils an ihrer vorgesehenen Position am Träger und über den Träger verteilt gehalten. Neben dieser lagegerechten Fixierung ist in bevorzugter Ausgestaltung darüber hinaus auch noch eine orientierungsgerechte Fixierung vorgenommen. Hierunter wird verstanden, dass die zumindest eine Komponente, insbesondere der Kontaktstecker am Träger derart ausgerichtet fixiert ist, dass er bei der späteren Montage beispielsweise bereits in Steckrichtung orientiert ist und insbesondere nicht mehr gedreht werden braucht.

Insbesondere ist in bevorzugter Ausgestaltung hierbei vorgesehen, dass die zumindest eine Komponente winklig, also unter einem von 0 verschiedenen Winkel schräg zum Träger orientiert ist. Speziell ist die Komponente senkrecht zum Träger orientiert. Bei der Verwendung eines Kontaktsteckers als Komponente ist die Steckrichtung winklig, beispielsweise schräg und insbesondere senkrecht zum Träger orientiert. Die vordere Stirnseite des Kontaktsteckers ist dabei dem Träger abgewandt orientiert. Alternativ hier ist die beispielsweise dem Träger zugewandt orientiert.

Gemäß einer zweckdienlichen Ausgestaltung ist mit dem Material des Trägers und durch Falten oder Biegen ein Sicherungsbereich ausgebildet, welcher die zumindest eine Komponente in ihrer fixierten Position gegen ein unbeabsichtigtes Herausfallen oder Herausrutschen sichert. Der Sicherungsbereich bildet dabei eine formschlüssige Sicherung oder auch Hindernis, sodass die zumindest eine Komponente auch bei einer Bewegung des Kabelsatzes in der fixierten Position verbleibt. Der Sicherungsbereich bildet beispielsweise einen Anschlag für die Komponente aus.

Zur Ausbildung des Sicherungsbereichs wird bevorzugt eine der nachfolgenden Optionen ausgewählt:
Gemäß einer ersten Option, die insbesondere im Zusammenhang mit der zuvor beschriebenen Haltelasche verwendet wird, ist der Sicherungsbereich mehrlagig ausgebildet, und zwar durch ein teilweises Freischneiden aus dem Träger sowie umbiegen und Falten des freigeschnittenen Teils, welcher dann insbesondere auch mit dem verbleibenden Träger verbunden wird, beispielsweise durch Kleben, Vernähen, Verschweißen, Klammern usw.. Der Sicherungsbereich ist hierbei insbesondere gegenüberliegend zu der Haltelasche ausgebildet.

Gemäß einer zweiten Option ist der Sicherungsbereich wiederum mehrlagig ausgebildet, jedoch ohne Freischneiden, sondern lediglich durch Falten des Trägers als solches.

Gemäß einer dritten Option ist der Sicherungsbereich durch seitliches Stauchen und dadurch bedingtes Aufwölben von Material des Trägers ausgebildet. Speziell wird hierbei ausgehend von der Variante mit dem Freischneiden das freigeschnittene Teilstück zunächst umgelegt und anschließend von den beiden Randseiten her gestaucht, sodass sich in der Mitte eine Aufwölbung ausbildet. Die beiden Randseiten werden anschließend mit der darunterliegenden Trägerlage fixiert, sodass die durch das Stauchen gebildete Aufwölbung fixiert ist.

Bei der Ausgestaltung mit den beiden unterschiedlich großen Öffnungsbereichen ist durch den Sicherungsbereich in bevorzugter Ausgestaltung eine Verbindung zwischen den beiden Öffnungsbereichen gesperrt, speziell ist der zuvor erwähnte Öffnungsschlitz zwischen den beiden Öffnungsbereichen durch den Sicherungsbereich gesperrt. Hierdurch ist der Verbindungsbereich zwischen den beiden Öffnungsbereichen blockiert. Der Sicherungsbereich ist insbesondere wiederum durch Falten insbesondere eines freigeschnittenen Teilbereiches ausgebildet.

Gemäß einer bevorzugten Ausgestaltung ist die Haltelasche um die Komponente herumgeführt und bildet eine abstehende Greiflasche für ein insbesondere automatisiertes Greifen aus. Insbesondere sind zwei gegenüberliegende Teilabschnitte der Haltelasche jeweils um eine Hälfte der zumindest einen Komponente herumgelegt und an einer Oberseite der Komponente zusammengeführt und miteinander beispielsweise durch Kleben, Klammern, Vernähen oder Verschweißen miteinander verbunden.

In bevorzugter Ausgestaltung sind am Träger weiterhin Ausnehmungen ausgebildet, die unterschiedliche Funktionen aufweisen können:
Bevorzugt sind durch die Ausnehmungen Halteelemente, insbesondere Haltegabeln geführt, die für das Verlegen der Leitungen auf dem Träger herangezogen werden und entlang derer die Leitungen beim Verlegen der Leitungen geführt werden/sind. In diese Haltegabeln werden üblicherweise die Leitungen eingelegt. Die Haltegabeln sind verteilt angeordnet und geben die Verlegegeometrie der Leitungen vor. Derartige Haltegabeln sind üblicherweise auf einem Montagebrett, auch als Verlegebrett bezeichnet, verteilt und stehen vertikal von diesem ab. Insgesamt werden die Leitungen mit den daran angeschlossenen elektrischen Komponenten daher von dem Verlegebrett beabstandet innerhalb einer Verlegeebene geführt. Innerhalb dieser Verlegeebene ist auch der Träger angeordnet.

Alternativ sind durch die Ausnehmungen Fixierelemente hindurchgeführt, über die der Träger am Trägermodul oder auch direkt an einem Karosseriebauteil befestigt werden kann und im endmontierten Zustand auch befestigt ist. Die Fixierelemente sind dabei insbesondere formschlüssig in den Ausnehmungen gehalten. Bei den Fixierelementen handelt es sich beispielsweise um Rastelemente, die in die Ausnehmungen eingesteckt und dort gehalten sind. Am Trägermodul sind wiederum entsprechende Aufnahmen für diese Fixierelemente ausgebildet.

Gemäß einer weiteren bevorzugten Variante ist zumindest im montierten Zustand durch die Ausnehmung ein elektrisches Bauteil zumindest teilweise hindurchgeführt, wobei dieses elektrische Bauteil im montierten Zustand mit dem Kabelsatz speziell über die zumindest eine Komponente verbunden ist. Das elektrische Bauteil ist dabei insbesondere am Trägermodul bzw. am Karosseriebauteil befestigt.

Eine solche zuletzt genannte Ausnehmung ist dabei vorzugsweise benachbart zu einer jeweiligen Haltelasche / Tasche als freie Ausnehmung ausgebildet und ausreichend groß bemessen, dass zumindest die Komponente hindurchgeführt werden kann. Bei der Montage des Kabelsatzes wird die Komponente aus der Haltelasche / Tasche entnommen, durch die freie Ausnehmung hindurchgeführt und an das elektrische Bauteil angeschlossen, bzw. wird die Komponente an das durch die freie Ausnehmung hindurchgeführte Bauteil angeschlossen. Unter "benachbart" wird daher entsprechend auch verstanden, dass die Ausnehmung so nahe an der Haltelasche angeordnet ist, dass die Komponente mit dem daran angeschlossenen Leitungen bis zu der freien Ausnehmung versetzt werden kann. In der Regel ist diese freie Ausnehmung beispielsweise maximal 15cm oder maximal 10cm oder maximal 5cm von der Haltelasche entfernt.

Im Ausgangszustand vor der Montage sind daher im Träger mehrere solcher freien Ausnehmungen ausgebildet, und zwar ist bevorzugt jeder Haltelasche für jeweils eine Komponente jeweils (genau) eine freie Ausnehmung zugeordnet.

Der gesamte Kabelsatz mit dem Träger dient allgemein zur Montagevereinfachung des Kabelsatzes speziell auf dem bereits mehrfach erwähnten Trägermodul oder auch direkt an einem Karosseriebauteil. In bevorzugter Ausgestaltung ist daher der Träger nach erfolgter Montage an einem solchen Trägermodul oder einem Karosseriebauteil im montierten Zustand angebracht. Am Trägermodul sind die bereits erwähnten elektrischen Bauteile befestigt, welche über den Kabelsatz elektrisch angeschlossen und mit dem weiteren Gesamtbordnetz des Kraftfahrzeugs verbunden sind. Der Träger ist hierzu allgemein großflächig ausgebildet und überdeckt eine Fläche von beispielsweise zumindest 0,5 m² oder auch 1 m². Bei dem Trägermodul handelt es sich insbesondere um ein Türmodul, ein Heckklappen-Modul, ein Dachmodul oder auch ein Armaturenbrettmodul. An diesem Modul sind üblicherweise mehrere elektrische Bauteile befestigt, wie beispielsweise elektrische Stellmotoren, wie bspw. Scheibenwischermotoren, Lautsprecher, Steuergeräte, elektrische Schlösser oder sonstige Aktoren und auch Sensoren.

Die Aufgabe wird gemäß der Erfindung weiterhin gelöst durch ein Verfahren zur Herstellung des Kabelsatzes und insbesondere auch zur nachfolgenden Montage des Kabelsatzes, wobei Leitungen gemäß einer vorgegebenen Verlegestruktur auf einem flexiblen Träger angebracht werden und zumindest eine Komponente, insbesondere ein Kontaktstecker an zumindest einer der Leitungen angebracht ist. Diese zumindest eine Komponente wird am Träger durch Material des Trägers zumindest temporär fixiert, und zwar derart, dass die zumindest eine Komponente bei der Montage des Kabelsatzes bewegbar und insbesondere betätigbar ist, speziell derart, dass die Komponente in einer Steckrichtung zum Einstecken in das elektrische Bauteil bewegbar ist. Hierzu bleibt insbesondere ein Teilbereich der zumindest einen Komponente zugänglich, sodass die zumindest eine Komponente für eine spätere Montage des Kabelsatzes zugänglich ist und insbesondere gegriffen werden kann.

Die zuvor im Hinblick auf den Kabelsatz angeführten Vorteile und bevorzugten Ausgestaltungen sind sinngemäß auch auf das Verfahren zu übertragen.

Für die Montage des Kabelsatzes wird dieser in bevorzugter Ausbildung automatisiert am Trägermodul angebracht, welches zumindest ein elektrisches Bauteil aufweist, welches mittels des Kontaktsteckers elektrisch mit dem Kabelsatz verbunden wird. Hierzu wird der Kontaktstecker automatisiert gegriffen und an das elektrische Bauteil, welches mit einem entsprechenden Gegenstecker versehen ist, angesteckt. Hierzu wird der Kontaktstecker vorzugsweise aus seiner fixierten Position, also beispielsweise aus der zuvor beschriebenen Haltelasche oder der zuvor beschriebenen Tasche herausgenommen und in die gewünschte Steckposition verbracht und durch die zuvor beschriebene freie Ausnehmung mit dem Gegenstecker verbunden.

Die zuvor bereits beschriebene freie Ausnehmung ist benachbart zur Haltelasche angebracht und die Komponente wird durch diese hindurch mit dem elektrischen Bauteil verbunden. Das Trägermodul und damit die elektrischen Bauteile befinden sich daher auf der den Leitungen abgewandten Seite des Trägers.

Bei der Montage wird bevorzugt derart vorgegangen, dass der Kabelsatz mit dem Träger voraus auf das Trägermodul bzw. das Karosseriebauteil aufgelegt wird. Die typischerweise bereits dort befestigten elektrischen Bauteile, zumindest die Gegenstecker, werden in den freien Ausnehmungen aufgenommen bzw. die freien Ausnehmungen sind im Bereich der zu kontaktierenden elektrischen Bauteile, insbesondere im Bereich der Gegenstecker positioniert. Die Leitungen sind an der dem Trägermodul bzw. Karosseriebauteil gegenüberliegender Seite des Trägers angeordnet.

Anschließend werden die Komponenten / Kontaktstecker gegriffen, aus den Haltelaschen / Taschen entnommen, durch die jeweils benachbarte freie Ausnehmung zum elektrischen Bauteil hindurchgeführt, bzw. an das in der freien Ausnehmung aufgenommene elektrische Bauteil angesteckt.

Für diese automatisierten Montage ist insbesondere ein geeignet ausgestaltete Handhabungsvorrichtung, insbesondere ein Roboter vorgesehen. Diese Handhabungsvorrichtung weist ein geeignetes Montagewerkzeug auf, welches beispielsweise durch einen Greifer gebildet oder zumindest einen solchen aufweist, über den die Komponente mittels des Roboters in die gewünschte Endposition verbracht wird, wobei hierzu insbesondere der freie Teilbereich der zumindest einen Komponente gegriffen und mittels des Roboters an die gewünschte Endposition verfahren wird.

Der vorbereitete Kabelsatz mit dem Träger ist grundsätzlich jedoch auch für eine manuelle Montage geeignet und ermöglicht eine besonders ergonomische Montage, da die Komponenten bereits im Bereich der späteren Montageposition fixiert sind.

Ausführungsbeispiele der Erfindung werden nachfolgend anhand der Figuren näher erläutert. Diese zeigen in vereinfachten Darstellungen:
- FIG 1: eine Aufsicht auf ein Montagebrett mit darauf angebrachtem Kabelsatz mit einem Träger,
- FIG 2A: eine perspektivische, ausschnittsweise Darstellung des Trägers mit Schnittlinien zum teilweise Freilegen einer Haltelasche,
- FIG 2B: den in FIG 2A dargestellten Abschnitt des Trägers, wobei die freigeschnittene Haltelasche zu einer Tasche umgeformt ist, in der ein Kontaktstecker aufgenommen ist,
- FIG 3: eine perspektivische, ausschnittsweise Darstellung des Trägers, mit einer teilweise freigeschnittenen Haltelasche,
- FIG 4A: eine perspektivische ausschnittsweise Darstellung des Trägers mit einer nach Art des Schlüsselloch-Prinzips ausgebildeten Öffnung mit einem großen Öffnungsbereich und einem kleinen Öffnungsbereich,

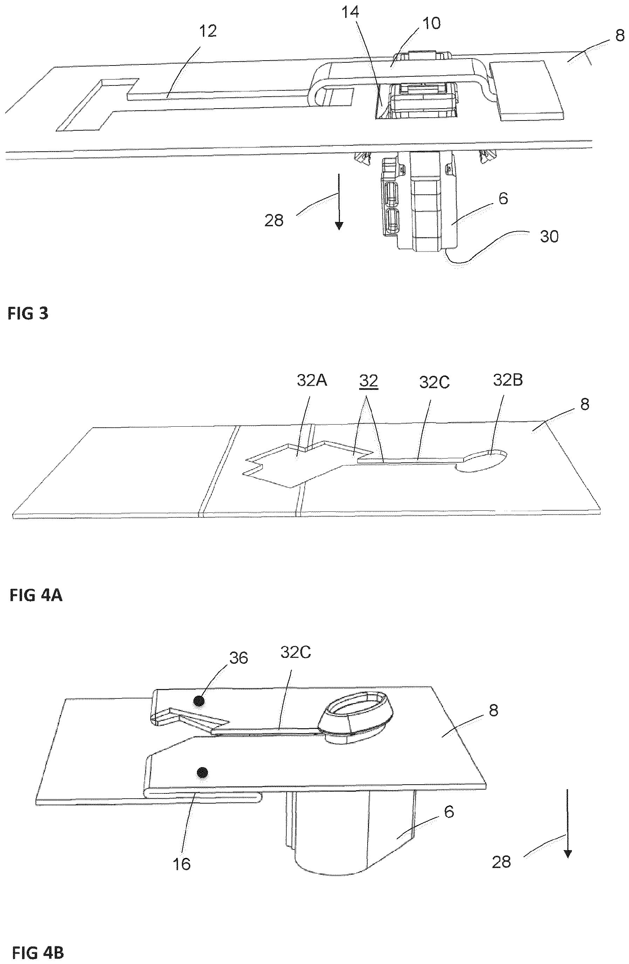

- FIG 4: den in FIG 4A dargestellten Ausschnitt nach der Montage einer Komponente und mit einem durch Falten ausgebildeten mehrlagigen Sicherungsbereich zum Sichern der Komponente,

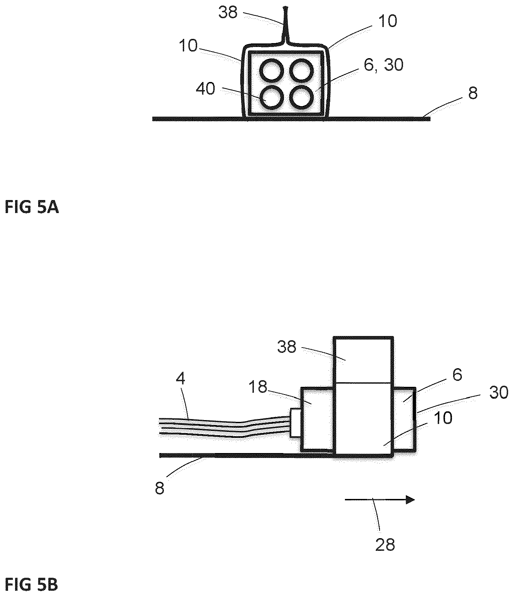

- FIG 5A: eine Stirnansicht auf einen mit einer Haltelasche fixierten Kontaktstecker, wobei eine abstehende Greiflasche ausgebildet ist sowie
- FIG 5B: eine Seitenansicht zu der FIG 5A.

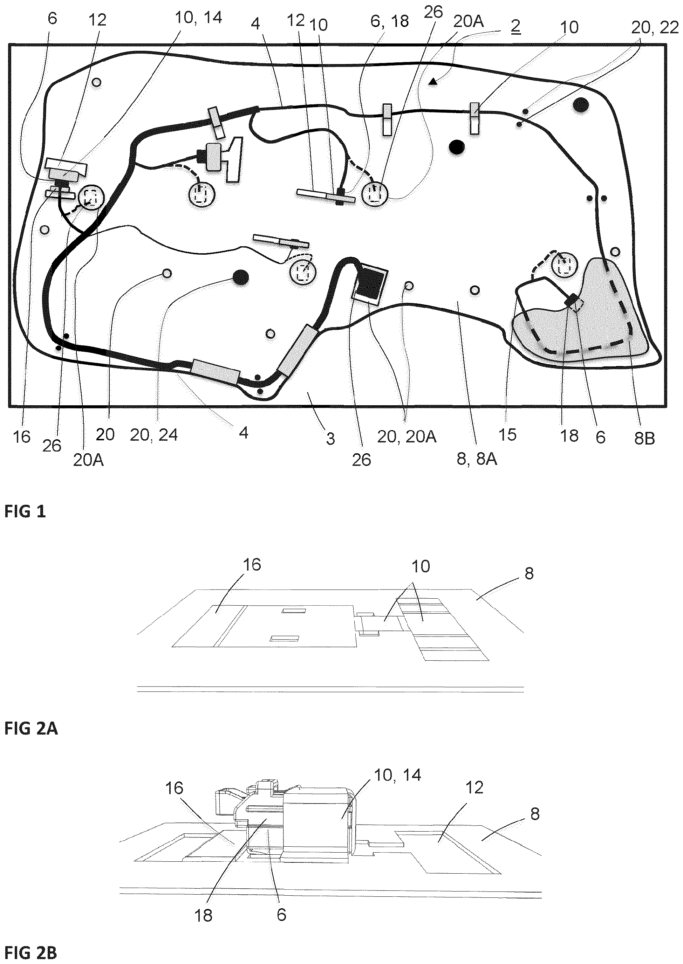

In FIG 1 ist ein Kabelsatz 2 dargestellt, und zwar auf einem Montagebrett 3 (Kabelbrett), welches als Hilfsmittel für die Ausbildung des Kabelsatzes 2 verwendet wird.

Der Kabelsatz 2 weist allgemein eine verzweigte Verlegestruktur mit einer Vielzahl von einzelnen Leitungen 4 auf, die zu einem Leitungsbündel zusammengefasst sind. Der Kabelsatz 2 weist unterschiedliche Abschnitte auch mit Abzweigungen auf, wobei die unterschiedlichen Abschnitte unterschiedliche viele Leitungen 4 aufweisen. Bei den einzelnen Leitungen 4 handelt es sich beispielsweise um einzelne Adern. Der Kabelsatz 2 weist weiterhin mehrere endseitig an den Leitungen 4 angeschlossene Komponenten 6 auf, die insbesondere als Kontaktstecker ausgebildet sind.

Die Leitungen 4 sowie die Komponenten 6 sind auf einem flexiblen Träger 8 angebracht, welcher insbesondere durch ein Vlies gebildet ist. Der Träger 8 weist hierbei eine Trägerlage 8A aus dem Vliesmaterial auf.

Wie nachfolgend noch im Detail näher erläutert wird, sind die einzelnen Komponenten 6 durch Material des Trägers 8 an diesem fixiert und damit ortsfest gehalten. Bevorzugt sind sie neben einer Lagefixierung auch in einer definierten Orientierung relativ zum Träger 8 gehalten.

Die Fixierung erfolgt insbesondere durch aus dem Trägermaterial frei geschnittene Haltelaschen 10, welche um eine jeweilige Komponente 6 gelegt sind und diese damit beispielsweise klemmend fixieren. Benachbart zu einer jeweiligen freigeschnittenen Haltelasche 10 ist daher eine freigeschnittene Öffnung 12 ausgebildet. Eine jeweilige Haltelasche 10 ist noch mit dem restlichen Träger 8 über eine Basisseite verbunden.

Neben den Komponenten 6 sind im dargestellten Ausführungsbeispiel auch die Leitungen 4 durch freigeschnittene Haltelaschen 10 oder auch durch randseitig umgebogene Haltelaschen fixiert.

Neben einer Fixierung der Komponenten 6 über die Haltelaschen 10 ist beispielhaft in FIG 1 auch eine Fixierung über eine Fixierlage 8B des Trägers 8 dargestellt. Diese ist bereichsweise auf einen Abschnitt der Trägerlage 8A angebracht und mit dieser beispielsweise durch Kleben, Nähen, Schweißen oder auch Klammern verbunden.

Eine der Komponenten 6 ist dabei zwischen der Trägerlage 8A und der Fixierlage 8B in einer zwischen diesen beiden Lagen ausgebildeten Tasche 14 mit ihrer Stirnseite voraus eingesteckt. Die Tasche 14 ist dabei insbesondere in Richtung zu einem Mittenbereich des Trägers 8 offen, d.h. die Öffnung der Tasche ist nicht nach Außen zu einem Rand des Trägers 8 orientiert. Die Fixierlage 8B ist insbesondere derart ausgebildet und angebracht, dass ein sich an die Komponente 6 anschließender Leitungsabschnitt 15 der angeschlossenen Leitungen 4 frei ist und gerade nicht von der Fixierlage 8B überdeckt ist, sondern vielmehr lose ist.

Alternativ hierzu ist auch der sich anschließende Leitungsabschnitt 15 von der Fixierlage 8B überdeckt. In diesem Fall - und grundsätzlich allgemein - ist die Fixierlage derart ausgebildet oder fixiert, dass der Leitungsabschnitt 15 nach Art eines Leitungsvorrates lose gehalten ist, so dass für die Montage ein ausreichender Bewegungsspielraum für die Komponente 6 gewährleistet ist, so dass also die Komponente 6 aus der Haltelasche 10 herausgezogen und an die gewünschte Montageposition gebracht werden kann.

Die zuvor beschriebenen Haltelaschen 10 bilden gemäß einer Ausführungsvariante lediglich Haltestreifen aus oder bilden ebenfalls Taschen 14 aus, in die eine jeweilige Komponente 6 eingesteckt ist. Die Komponente ist üblicherweise mit ihrer vorderen Stirnseite voraus in die Tasche 14 eingesteckt.

Eine jeweilige Tasche 14 umschließt bis auf eine vordere Taschenöffnung einen Taschenraum vollständig, in den die Komponente 6 jeweils eingesteckt ist.

Bei den zu der FIG 1 gezeigten streifenförmigen Haltelaschen 10 sind diese jeweils umfangsseitig um den Umfang der jeweiligen Komponente 6 herumgelegt, sodass die beiden gegenüberliegenden Stirnseiten jeweils nicht verdeckt sind.

Bei derartigen Haltelaschen 10 wird bei der Montage die jeweilige Komponente 6 beispielsweise in einfacher Weise lediglich durch die streifenförmige Haltelasche 10 hindurchgeschoben, und zwar insbesondere vollständig, und dann mit einem elektrischen Bauteil 26 verbunden.

Die Haltelaschen 10 bzw. die Taschen 14 sind beispielsweise derart passgenau ausgebildet, dass die jeweilige Komponente 6 von diesen klemmend gehalten ist. Auf zusätzliche Sicherungselemente ist beispielsweise verzichtet. Alternativ wird die jeweilige Komponente 6 an der fixierten Position jeweils noch durch einen Sicherungsbereich 16 gesichert.

Beispielsweise ist der Sicherungsbereich 16 durch eine Aufwölbung gebildet, wie sie bei einer der Komponenten 6 in FIG 1 angedeutet ist. Zur Ausbildung des Sicherungsbereichs 16 wird hierbei zunächst wiederum ein Streifen aus der Trägerlage 8A teilweise freigeschnitten, der frei geschnittene Streifen wird umgeklappt und in Richtung zur Komponente 6 hin auf die verbleibende Trägerlage 8A aufgelegt. Anschließend wird dieser frei geschnittene und umgelegte Streifen von seinen beiden Randseiten her nach innen zur Mitte gestaucht, sodass er sich in der Mitte aufstaucht und damit die Auswölbung bildet. Hierdurch ist eine gute formschlüssige Sicherung der Komponente 6 erreicht.

Der Sicherungsbereich 16 ist üblicherweise allgemein gegenüberliegend zur Haltelasche 10 bzw. Tasche 14 angeordnet. Der Sicherungsbereich 16 bildet daher allgemein eine durch das Trägermaterial ausgebildete formschlüssige Sperre, nach Art eines Anschlags, an der die Komponente anschlägt. Sie ist hierdurch gegen ein unerwünschtes, versehentliches Herausfallen beispielsweise beim Transport gesichert.

Der Sicherungsbereich 16 ist vorzugsweise allgemein zwischen der Trägerlage 8 und dem an der jeweiligen Komponente 6 angeschlossenen Leitungsabschnitt 15 angeordnet, d.h. der Leitungsabschnitt 15 ist nicht von dem Sicherungsbereich 16 überdeckt. Dadurch kann bei der späteren Montage die Komponente 6 in einfacher Weise gegriffen und beispielsweise aus der Tasche 14 nach hinten herausgezogen werden. Aufgrund des flexiblen Trägermaterials lässt sich der Sicherungsbereich 16 dabei problemlos durch die ausgeübten Montagekräfte überwinden.

Weitere Ausführungsvarianten des Sicherungsbereichs werden nachfolgend auch im Zusammenhang mit FIG 2B oder FIG 4B in unterschiedlichen Varianten erläutert.

Die Komponenten 6 sind am Träger 8 an einer definierten Position lagefixiert und bevorzugt auch in einer vorgegebenen Orientierung. Grundsätzlich ist jedoch ein Teilbereich 18 der Komponente 6 frei zugänglich. Dieser Teilbereich 18 wird bei der späteren Montage mit einem geeigneten Betätigungswerkzeug, beispielsweise einem Greifer betätigt, insbesondere gegriffen und an eine gewünschte Endmontageposition überführt, insbesondere wird die als Kontaktstecker ausgebildete Komponente 6 gegriffen und in einen korrespondierenden Gegenstecker eingesteckt. Die Fixierung durch die Haltelasche 10 / die Tasche 14, beispielsweise auch durch die beschriebenen Sicherungsbereiche 16 wird hierbei überwunden, beispielsweise indem die Sicherungsbereiche 16 weggedrückt werden oder der evtl. ausgebildete Kraftschluss überwunden wird.

Bei den streifenförmigen Haltelaschen 10 wird die Komponente beispielsweise mit einem Stempel als Betätigungswerkzeug hindurchgedrückt.

Der Träger 8 weist weiterhin verschiedene Ausnehmungen 20 auf, die beispielsweise durch Stanzen ausgebildete Löcher ausbilden. Diese dienen beispielsweise zur Aufnahme und Halterung von Haltegabeln 22, auf denen die Leitungen 4 und auch der Träger 8 aufgelegt ist. Diese sind am Montagebrett 3 befestigt und stehen von diesem insbesondere vertikal ab.

Weiterhin sind vorzugsweise in solche Ausnehmungen 20 Fixierelemente 24, beispielsweise nach Art von Befestigungszapfen oder Befestigungsklips eingesetzt und dort gehalten. Diese dienen zum Befestigen des Trägers 8 und damit des Kabelsatzes 2 beispielsweise an einem Trägermodul. Schließlich können auch Ausnehmungen 20 für die Aufnahme von elektrischen Bauteilen 26, wie beispielsweise einem Steuergerät ausgebildet sein.

Hervorzuheben sind weiterhin sogenannte freie Ausnehmungen 20A. Bei diesen handelt es sich um im Ausnehmungen 20A, die - vor der Montage des Kabelsatzes 2 an einem Trägermodul oder einem Karosseriebauteil - frei und unbelegt sind. Sie sind benachbart zu einer jeweiligen Haltelasche 10 bzw. Tasche 14 ausgebildet. Sie dienen dazu, bei der Montage eine jeweilige Komponente 6 durch die freie Ausnehmung 20A hindurch mit einem jeweiligen elektrischen Bauteil 26 zu kontaktieren. Hierzu wird die Komponente 6 beispielsweise mit einem Teilbereich voraus zumindest teilweise durch den Träger 8 durchgesteckt und damit auf die gegenüberliegende Seite des Trägers 8 geführt. Alternativ taucht das elektrische Bauteil 26 zumindest teilweise in diese freie Ausnehmung 20A von der gegenüberliegenden Seite ein und teilweise hindurch und wird mit der Komponente 6 verbunden.

In der FIG 1 sind in diesen freien Ausnehmungen 20A die später nach der Montage dort befindlichen elektrischen Bauteile 26 sowie der Verlauf der Leitungen 4 durch gestrichelte Linien angedeutet.

Die Figuren 2A, 2B zeigen eine Ausführungsvariante, bei der eine Haltelasche 10 teilweise freigeschnitten ist, die anschließend durch Falten und Umlegen eine Tasche 14 ausbildet. Randseiten der Haltelasche 10 werden mit dem Träger 8 beispielsweise durch Schweißen verbunden. In diese Tasche 14 ist eine als Kontaktstecker ausgebildete Komponente 6 eingesteckt.

Weiterhin ist ein Sicherungsbereich 16 gegenüberliegend zu der Tasche 14 ausgebildet. Hierzu ist wiederum ein Teil, auch als Sicherungslasche bezeichnet, analog zur Haltelasche 10 freigeschnitten. Diese Sicherungslasche ist umgelegt, sodass der Sicherungsbereich 16 mehrlagig durch die Trägerlage 8A und der zusätzlichen darauf gelegten Sicherungslasche ausgebildet ist.

In der FIG 3 ist ein Ausführungsbeispiel dargestellt, bei der eine Komponente 6 durch eine Ausnehmung 20 am Träger 8 teilweise hindurchgesteckt ist und anschließend mithilfe einer umgelegten Haltelasche 10 gesichert ist. Die streifenförmige Haltelasche 10 ist bei diesem Ausführungsbeispiel quer über eine (rückseitige) Stirnseite der Komponente 6 geführt. Die Haltelasche 10 verläuft hierbei etwas beabstandet von dem Träger 8, so dass durch die Ausnehmung 20 und durch die Haltelasche 10 ebenfalls eine Art Tasche 14 ausgebildet ist.

Hervorzuheben ist bei dieser Ausführungsvariante auch, dass die Komponente 6 senkrecht zum Träger 8 orientiert gehalten ist.

Die Komponente 6 ist wiederum als ein Kontaktstecker ausgebildet und erstreckt sich in einer Längsrichtung, die zugleich eine Steckrichtung 28 ist. An der (in Steckrichtung 28 gesehenen) vorderen Stirnseite 30 sind Steckkontakte 40, beispielsweise in Form von Kontaktbuchsen oder Kontaktstiften ausgebildet (vgl. FIG 5A). Diese vordere Stirnseite 30 definiert daher einen Steckbereich des Kontaktsteckers. Der Kontaktstecker wird bei der späteren Endmontage also in Steckrichtung 28 in einen entsprechend komplementär ausgestalteten Gegenstecker eingesteckt. Die Leitungen 4 sind typischerweise auf der der Stirnseite 30 gegenüberliegenden Seite des Trägers 8 angeordnet und an dem rückwärtigen Bereich der Komponente 6 geeignet angeschlossen (in FIG 3 nicht dargestellt).

Alternativ ist die Komponente 6 mit der vorderen Stirnseite 30 voraus in Richtung zur Haltelasche 10 orientiert, d.h. mit dieser Stirnseite 30 voraus in die gebildete Tasche 14 eingesteckt.

In den Figuren 4A, 4B ist eine Ausführungsvariante dargestellt, bei der im Träger 8 eine Öffnung 32 ausgebildet ist, mit einem großen Öffnungsbereich 32A sowie einem kleinen Öffnungsbereich 32B, die im Ausführungsbeispiel durch eine schlitzförmige Verbindung 32C miteinander verbunden sind. In diese Öffnung 32 wird eine Komponente 6 eingesetzt. Hierzu wird sie zunächst in den großen Öffnungsbereich 32A eingesetzt, anschließend seitlich in den kleinen Öffnungsbereich 32B überführt, wobei dieser derart ausgebildet ist, dass er die Komponente, insbesondere einen nach Art eines Vorsprungs ausgebildeten verbreiterten Haltebereich 34 formschlüssig hintergreift. Insbesondere weist die Komponente 16 beispielsweise eine Einschnürung auf, welche vom Öffnungsrand des kleinen Öffnungsbereich 32B umgriffen wird.

Bei dieser Ausführungsvariante ist vorzugsweise ebenfalls ein Sicherungsbereich 16 ausgebildet. Und zwar wird hierzu der Träger 8 insgesamt gefaltet, also ohne dass ein teilweises Freischneiden erfolgt. Durch die ausgebildete Faltung ist der Sicherungsbereich 16 wiederum mehrlagig ausgebildet, wobei der Sicherungsbereich quer zur Verbindung 32C verläuft und diese dadurch sperrt.

Die verschiedenen Lagen des Sicherungsbereichs 16 sind wiederum miteinander in geeigneter Weise fest verbunden, beispielsweise an Fixierpunkten 36.

In den Figuren 5A, 5B ist eine Ausführungsvariante dargestellt, bei der die Haltelasche 10 durch zwei gegenüberliegende Laschenabschnitte ausgebildet ist, die umfangsseitig um die Komponente 6 jeweils hälftig herumgeführt sind und die an der Oberseite der Komponente 6 wieder zusammengeführt und miteinander verbunden sind. Sie stehen gemeinsam nach oben ab und bilden dadurch eine Greiflasche 38 aus. Diese Greiflasche 38 dient bei der Endmontage zum Greifen durch die Handhabungsvorrichtung (Roboter), sodass also durch einen Greifer der Träger 8 gemeinsam mit der Komponente 6 gegriffen und positioniert werden kann.

Bei dieser Ausführungsvariante wird vorzugsweise derart vorgegangen, dass zunächst die Komponente 6 an die gewünschte Montageposition platziert wird, sodass also insbesondere die Komponente 6 gegenüberliegend zum Gegenstecker positioniert ist. Anschließend wird die Komponente 6 durch die Haltelasche 10 von hinten in Steckrichtung 28 hindurchgedrückt, sodass die gewünschte Steckverbindung mit einem Gegenstecker ausgebildet wird.

### Bezugszeichenliste

- 2: Kabelsatz
- 3: Montagebrett
- 4: Leitungen
- 6: Komponente
- 8: Träger
- 8A: Trägerlage
- 8B: Fixierlage
- 10: Haltelasche
- 12: freigeschnittene Öffnung
- 14: Tasche
- 15: Leitungsabschnitt
- 16: Sicherungsbereich
- 18: Teilbereich
- 20: Ausnehmungen
- 20A: freie Ausnehmung
- 22: Haltegabeln
- 24: Fixierelement
- 26: elektrisches Bauteil
- 28: Steckrichtung
- 30: Stirnseite
- 32: Öffnung
- 32A: großer Öffnungsbereich
- 32B: kleiner Öffnungsbereich
- 32C: Verbindung
- 34: Haltebereich (Vorsprung)
- 36: Fixierpunkt
- 38: Greiflasche
- 40: Steckkontakt

## Patentansprüche

1. Kabelsatz (2), insbesondere für ein Fahrzeug, mit einer Mehrzahl von Leitungen (4), die gemäß einer vorgegebenen Verlegestruktur auf einem flexiblen Träger (8) angebracht sind und mit zumindest einer an zumindest einer der Leitungen (4) angebrachten elektrischen Komponente (6), die am Träger (8) durch Material des Trägers (8) zumindest temporär fixiert ist, derart, dass die zumindest eine Komponente (6) bei einer späteren Montage des Kabelsatzes (2) bewegbar ist und zwar insbesondere in eine Steckrichtung (28) zum Einstecken in ein elektrisches Bauteil (26).

2. Kabelsatz (2) nach dem vorhergehenden Anspruch wobei aus dem Träger (8) zumindest eine Haltelasche (10) teilweise freigeschnitten, um die zumindest eine Komponente (6) gelegt und anschließend wieder zumindest punktuell mit dem Träger (8) verbunden ist.

3. Kabelsatz (2) nach dem vorhergehenden Anspruch, wobei durch die zumindest eine Haltelasche (10) eine nur einseitig offene Tasche (14) ausgebildet ist, in der die zumindest eine Komponente (6) einliegt.

4. Kabelsatz (2) nach Anspruch 1, wobei im Träger (8) eine Öffnung (32) mit zwei unterschiedlich großen Öffnungsbereichen (32A, 32B) ausgebildet ist und die zumindest eine Komponente (6) durch den großen Öffnungsbereich (32A) zumindest teilweise hindurchgeführt und durch seitliches Verlagern in den kleinen Öffnungsbereich (32B) verschiebbar und dort formschlüssig gehalten ist.

5. Kabelsatz (2) nach Anspruch 1, wobei der Träger (8) bevorzugt lediglich teilweise zweilagig mit einer Trägerlage (8A) und einer daran angebrachten Fixierlage (8B) ausgebildet ist, wobei die zumindest eine Komponente (6) in einer zwischen der Trägerlage (8A) und der Fixierlage (8B) ausgebildeten Tasche (14) fixiert ist, wobei die Fixierlage (8B) vorzugsweise verschieden zu der Trägerlage (8A) ausgebildet ist, insbesondere dünner und/oder mit einem geringeren Flächengewicht ausgebildet ist.

6. Kabelsatz (2) nach dem vorhergehenden Anspruch, wobei die Fixierlage (8B) einen sich an die Komponente (6) anschließenden Leitungsabschnitt (15) der zumindest einen Leitung (4) freilässt.

7. Kabelsatz (2) nach einem der vorhergehenden Ansprüche, wobei es sich bei der zumindest einen Komponente (6) um einen Kontaktstecker handelt, welcher sich in einer Steckrichtung (28) erstreckt und der in Steckrichtung (28) an einer vorderen Stirnseite (30) Steckkontakte (40) zur elektrischen Steckverbindung mit einem Gegenstecker aufweist.

8. Kabelsatz (2) nach einem der vorhergehenden Ansprüche, wobei es sich bei dem Träger (8) um einen textilen Träger (8) wie ein Vlies oder ein Gewebe handelt.

9. Kabelsatz (2) nach einem der vorhergehenden Ansprüche, wobei die zumindest eine Komponente (6) nur temporär fixiert ist und aus seiner fixierten Position entfernt werden kann.

10. Kabelsatz (2) nach einem der vorhergehenden Ansprüche, wobei die zumindest eine Komponente (6) in einer definierten Orientierung bezüglich des Trägers (8) und insbesondere winklig an diesem fixiert ist.

11. Kabelsatz (2) nach einem der vorhergehenden Ansprüche, wobei mit dem Material des Trägers (8) und durch Falten ein Sicherungsbereich (16) ausgebildet ist, wobei der Sicherungsbereich (16) die zumindest eine Komponente (6) in ihrer fixierten Position sichert.

12. Kabelsatz (2) nach dem vorhergehenden Anspruch, wobei
- der Sicherungsbereich (16) mehrlagig und durch ein teilweises Freischneiden aus dem Träger (8) sowie durch anschließendes Falten ausgebildet ist,
- der Sicherungsbereich (16) mehrlagig und durch Falten des Trägers (8) ohne Freischneiden ausgebildet ist,
- der Sicherungsbereich (16) durch Stauchen und dadurch Aufwölben von Material des Trägers (8) ausgebildet ist,
- der Sicherungsbereich (16) bei einer Ausgestaltung gemäß Anspruch 4 eine Verbindung zwischen den beiden Öffnungsbereichen (32A, 32B) sperrt.

13. Kabelsatz (2) nach einem der vorhergehenden Ansprüche und nach Anspruch 2 oder 3, wobei die Haltelasche (10) um die Komponente (6) herumgeführt ist und eine abstehende Greiflasche (38) für ein insbesondere automatisiertes Greifen ausbildet.

14. Kabelsatz (2) nach einem der vorhergehenden Ansprüche, bei dem im Träger (8) Ausnehmungen (20, 20A) ausgebildet sind, durch die wahlweise
- Halteelemente, insbesondere Haltegabeln (22), für das Verlegen der Leitungen (4) auf dem Träger (8) hindurchgeführt sind, oder
- Fixierelemente (24) hindurchgeführt sind, die zum Befestigen des Trägers (8) an einem Trägermodul oder an einem Karosseriebauteil ausgebildet sind,
- im montierten Zustand die Komponente und / oder ein elektrisches Bauteil (26) hindurchgeführt ist, wobei die entsprechende Ausnehmung (20A) im Träger (8) im Ausgangszustand neben einer Haltelasche (10) als eine freie Ausnehmung (20A) ausgebildet ist.

15. Verfahren zur Herstellung eines Kabelsatzes (2), insbesondere nach einem der vorhergehenden Ansprüche, bei dem Leitungen (4) gemäß einer vorgegebenen Verlegestruktur auf einem flexiblen Träger (8) angebracht werden, wobei zumindest eine Komponente (6), insbesondere ein Kontaktstecker an zumindest einer der Leitungen (4) angebracht ist, wobei die zumindest eine Komponente (6) am Träger (8) durch Material des Trägers (8) zumindest temporär fixiert wird, derart, dass die zumindest eine Komponente (6) bei einer späteren Montage des Kabelsatzes (2) bewegbar ist und zwar insbesondere in eine Steckrichtung (28) zum Einstecken in ein elektrisches Bauteil (26), wobei in bevorzugter Weiterbildung der Kabelsatz (2) automatisiert an einem Trägermodul oder einem Karosseriebauteil angebracht wird, welches zumindest ein elektrisches Bauteil (26) aufweist, das mittels des Kontaktsteckers elektrisch mit dem Kabelsatz (2) verbunden wird, wobei hierzu der Kontaktstecker automatisiert gegriffen und an das elektrische Bauteil (26) in Steckrichtung (28) angesteckt wird.
